(19) Europäisches Patentamt

European Patent Office

Office européen des brevets

(11) **EP 4 177 800 A1**

(12) **EUROPEAN PATENT APPLICATION**

(43) Date of publication:
**10.05.2023 Bulletin 2023/19**

(21) Application number: **21207022.1**

(22) Date of filing: **08.11.2021**

(51) International Patent Classification (IPC):
**G06N 10/60** $^{(2022.01)}$ **G06N 10/20** $^{(2022.01)}$

(52) Cooperative Patent Classification (CPC):
**G06N 10/60; G06N 10/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JoS QUANTUM Intellectual Property GmbH**
**60327 Frankfurt am Main (DE)**

(72) Inventors:
 • **Braun, Markus C.**
 **60327 Frankfurt am Main (DE)**

 • **Hegemann, Niklas**
 **60327 Frankfurt am Main (DE)**
 • **Kerstan, Sven F.**
 **60327 Frankfurt am Main (DE)**
 • **Decker, Thomas**
 **60327 Frankfurt am Main (DE)**

(74) Representative: **Schwenderling, Jens**
 **KEENWAY Patentanwälte Neumann Heine Taruttis**
 **PartG mbB**
 **Postfach 103363**
 **40024 Düsseldorf (DE)**

(54) **QUANTUM COMPUTING DEVICE**

(57) Quantum computing device (1) comprising:
- a first register (2) having $N_1$ qudits (4), wherein $N_1 \geq 1$,
- a second register (3) having $N_2$ main qudits (5), wherein $N_2 \geq 2$,
- for each main qudit (5) of the second register (3) a respective initialization gate (7) and a respective controlled gate (8), wherein the controlled gates (8) are configured to act on the respective main qudit (5) after initialization by the respective initialization gate (7),
wherein each of the controlled gates (8) is configured for a phase kickback onto one of the qudits (4) of the first register (2).

Fig. 2

EP 4 177 800 A1

**Description**

The invention is directed to a quantum computing device, a use thereof and a method for performing a quantum algorithm. In particular, the invention is directed to the so called Quantum Phase Estimation (QPE) and Quantum Amplitude Estimation (QAE) algorithms.

Currently, several gate-based quantum computers produced by a number of different hardware providers are accessible for customers via the cloud. However, the known quantum computers are not powerful enough yet to solve real-world problems that are difficult for classical computers. The main reason is that the quality of qudits (such as qubits) of known quantum computers is far too low to execute a real-world quantum algorithm with a sufficiently low error rate. On top of that, the connectivity between qudits is limited.

Many well-known applications that would benefit from the execution on quantum computers, such as Value-at-Risk (VaR) calculations, the calculation of option prices or the calculation of sensitivities of risk models rely on the known QAE algorithm, which itself is a variant of the known QPE algorithm. The gate depth required by the QPE in real-world applications, such as the ones mentioned above, is orders of magnitude too large for the fidelity of current quantum computing hardware.

The object of the invention is to improve the prior art so that available hardware elements are used more efficiently. In particular, it is an object of the invention to perform QPE or QAE in a particularly efficient and accurate manner.

The object is solved with the quantum computing device, the use thereof and the method according to the independent claims. Advantageous refinements are presented in the dependent claims. The features described in the claims and in the description can be combined with each other in any technologically reasonable manner.

According to the invention a quantum computing device is presented that comprises:

- a first register having $N_1$ qudits, wherein $N_1 \geq 1$,
- a second register having $N_2$ main qudits, wherein $N_2 \geq 2$,
- for each main qudit of the second register a respective initialization gate and a respective controlled gate, wherein the controlled gates are configured to act on the respective main qudit after initialization by the respective initialization gate,

wherein each of the controlled gates is configured for a phase kickback onto one of the qudits of the first register.

The described quantum computing device can be configured as a quantum computer. Alternatively, the described quantum computing device can be configured to be used as part of a quantum computer. The described quantum computing device can be combined with further quantum computing or conventional computing hardware.

The described quantum computing device comprises qudits. A qudit can be realized in a d-level quantum system. In most applications, quantum computers use qubits, which are qudits realized in a 2-level quantum system. Whenever herein a qudit is described, it is preferred that the qudit is a qubit or a collection of qubits. However, the advantages of the described quantum computing device cannot only be achieved with qubits, but with any qudits. For example, qutrits can be used, which are 3-level qudits. Alternatively, it is possible to use multiple qubits together as a qudit. In such a case the qubits that jointly constitute the qudit can be referred to as a subregister of qubits.

Preferably, all qudits of the described quantum computing device are realized on the same piece of hardware. However, it is also possible that several pieces of hardware interact with each other so as to jointly constitute the described quantum computing device. It is even possible to realize the described quantum computing device in that several quantum computers are connected to each other so as to form a network.

The described quantum computing device is preferably configured for Quantum Phase Estimation (QPE). This is a quantum algorithm that calculates an unknown eigenvalue $\lambda$ of an operator U when an eigenstate $|\lambda\rangle$ or approximation thereof is given. In case of QPE the operator U is preferably implemented as a quantum circuit by a controlled gate. Also, the initialization gates preferably constitute a respective quantum circuit for initializing a qudit in the eigenstate $|\lambda\rangle$ or approximation thereof.

The described quantum computing device is preferably configured for Quantum Amplitude Estimation (QAE). Herein, the term QAE is used for the algorithm "Amplitude Estimation" described in arXiv:quant-ph/0005055. Since QAE is a variant of QPE, this case can be considered a refinement of the previously described case. In the case of QAE, the quantum computing device is preferably configured for providing a binary encoding of the probability of "good results". In the case of low depth QAE, the probability of a single qudit to be in a certain state encodes information about the probability of the "good results".

A key difference between QPE and QAE in the standard version lies in the preparation of the eigenstate $|\lambda\rangle$ of the operator U. For QPE, an eigenstate $|\lambda\rangle$ or an approximation thereof is prepared. In the case of standard QAE, in contrast, the preparation is done by an operator that prepares a superposition of two eigenstates. The standard version of QPE with a Grover operator then produces a superposition of two solutions. A subsequent measurement then yields one of two eigenvalues and both lead to the same overall solution.

Using the described quantum computing device, however, a single eigenstate $|\lambda\rangle$ or approximation thereof instead of a superposition can be used. Hence, in case the operator implemented by the controlled gates has more than one eigenstate, the initialization gates are preferably configured for initializing the main qudits in the same eigenstate. The prepared state is preferably no superposition of eigenstates.

Although the described quantum computing device is particularly suitable for QPE and QAE, the described advantages can be achieved in various other quantum algorithms. As soon as a quantum algorithm involves an operator which acts repeatedly, the described parallel processing can be beneficial. For illustrative purposes, QPE and QAE are used herein as examples. Apart from that can the described quantum computing device be used for performing only parts of QPE or QAE. In such a case, for example, the remainder of the QPE or QAE, respectively, could be performed using further quantum or conventional hardware.

With the described quantum computing device the available hardware can be used particularly efficiently. This is possible because with the described quantum computing device operations can be performed in parallel instead of in series, which reduces the gate depth. In other words, the described quantum computing device is a setup that is at least partly parallel. At a given fidelity, a lower gate depth can lead to a lower error rate. That is, with the described quantum computing device a particularly low error rate can be achieved even if the fidelity is not improved. This applies in particular in view of errors caused by hardware inherent decoherence. To this end, available hardware components can be used particularly efficiently with the described quantum computing device. Also, a lower gate depth reduces the computation time. Thereby, in particular QPE or QAE can be performed in an efficient manner with the described quantum computing device.

The parallel processing of operations is possible because of the arrangement of qudits within the described quantum computing device. The qudits are arranged in two registers. Herein, the term "register" is supposed to be understood as a group of qudits. Preferably, the qudits of a register are realized with the same piece of hardware. However, it is also possible that the qudits of a register are distributed over several pieces of hardware. It is even possible that several quantum computers interact with each other such that the qudits of a register are distributed over these quantum computers. In particular, the second register can be realized with quantum processing units distributed over several quantum computers.

The first register has $N_1$ qudits and the second register has $N_2$ main qudits. Therein, the expression "main qudits" is used because below it is also described that the second register can further have "auxiliary qudits". The qudits of the first register are preferably configured in the same way. The qudits of the second register are preferably configured in the same way. This applies not only of the main qudits of the second register, but also to the auxiliary qudits. The qudits of the first register are preferably different from the qudits of the second register. For example, the first register can have $N_1$ qubits as qudits of a first type and the second register can have $N_2$ subregisters of qubits as qudits of a second type. Preferably, the $N_2$ subregisters are preferably identical to each other, for example so as to comprise $x$ qubits of the first type.

Preferably, the qudits of the first register are qubits. Preferably, the main qudits of the second register are qubits. Alternatively, it is preferred that the main qudits of the second register are realized by a respective subregister comprising multiple qubits, for example two or three qubits each. Preferably, the auxiliary qudits are qubits.

The described quantum computing device comprises, for each main qudit of the second register, a respective initialization gate and a respective controlled gate. The initialization gates are preferably configured to initialize the respective main qudit in an eigenstate of the respective controlled gate or in an approximation of such an eigenstate. Ideally, the main qudits are initialized in a state that is exactly an eigenstate of the respective controlled gate. However, the described advantages can already be achieved if this condition is not met exactly, that is if the initial state is only an approximation of an eigenstate. Therein, a state is supposed to be regarded as an "approximation of an eigenstate" if the overlap of the state and the exact eigenstate is at least 90%, that is, the absolute value of the projection of the state onto the eigenstate is at least 0.9, i.e. the fidelity of the state and the exact eigenvector is at least 0.9. For simplicity, herein it is not always pointed out that an approximation of an eigenstate is sufficient whenever an eigenstate is referred to. Also, it is conceivable to use the described quantum computing device with initial states that do not fulfill this definition and thus do not qualify as an approximation of an eigenstates.

In a quantum algorithm the initialization gates preferably act onto the respective main qudit as a first step. The controlled gates are configured for implementing an operator that acts on the main qudit. The "eigenstate of the controlled gate" is in fact the eigenstate of this operator. However, as is commonplace in quantum computing, herein this is simply referred to as the "eigenstate of the controlled gate". Preferably, all controlled gates are configured identically. That is, all controlled gates implement the same operator. In case this operator has more than one eigenstate, the initialization gates are preferably configured for initializing the main qudits in the same eigenstate or in an approximation of the same eigenstate. That is, after initialization all main qudits are preferably in the same eigenstate or approximation thereof.

The initialization gates and the controlled gates can be used to provide input into the described quantum computing device. That is, the initialization gates and the controlled gates provide the input values for the performed algorithm such as the QPE or QAE. Amending the design of the initialization gates and/or the controlled gates can thus change the input of the algorithm. It is preferred that the initialization gates and/or the controlled gates are software configurable gates. This way, the initialization gates and/or the controlled gates can be amended by software. In that case the described quantum computing device can be used for various input values. In theory, however, it is also conceivable to use hardware that does not allow such manipulation.

The controlled gates are configured to act on the respective main qudit after initialization by the respective initialization gate. That is, after a certain main qudit has been initialized by the respective initialization gate, the controlled gate associated with this main qudit acts on this main qudit. By doing so, the state of the main qudit can be changed from the eigenstate of the controlled gate to a manipulated state.

Each of the controlled gates is configured for a phase kickback onto one of the qudits of the first register. That is supposed to be understood such that each of the controlled gates is configured for a phase kickback onto at least one of the qudits of the first register. Preferably, however, each of the controlled gates is configured for a phase kickback onto one and only one of the qudits of the first register. The quantum computing device is configured such that a phase can be kicked back from each of the main qudits of the second register to one of the qudits of the first register, wherein the phase is generated when applying the controlled gate to the respective main qudit. "Phase kickback" is a known method in quantum computing. Therein, a controlled gate acts on a certain qudit (here a main qudit of the second register), wherein a phase of a different qudit (here the respective qudit of the first register) that is coupled to the controlled gate is affected in that its phase is altered. In QPE and QAE phase kickback is used.

It is $N_1 \geq 1$. That is, the first register can have one or more qudits. In QPE the number of qudits in the first register determines the accuracy of the obtained result. For example, with $N_1 = 3$ qudits in the first register the result can be obtained with three-bit precision. In real-world application this precision is often not sufficient, such that $N_1$ is preferably larger than 10.

Further, it is $N_2 \geq 2$. That is, the second register has at least two main qudits. In particular this contributes to using the available hardware elements particularly efficiently. Since the second register has at least two main qudits, the eigenstate of the operator is not only initialized once, but at least twice. That is, initially there are at least two copies of the eigenstate of the controlled gate. Subsequently, the operator is applied to each of the main qudits, that is to each copy of the eigenstate. In algorithms that require multiple applications of the operator to an eigenstate, this can reduce the gate depth. If the second register had only one main qudit, multiple application of the operator to the eigenstate could only be achieved in that the operator would be applied to the main qudit multiple times in series as is done in standard QPE or QAE. However, this would mean that multiple controlled gates had to act on the main qudit. Given the low fidelity of available hardware, this could result in a high error rate.

With the described quantum computing device a lower error rate can be achieved. This is possible as soon as there is more than one main qudit in the second register. The more main qudits there are in the second register, the more pronounced this effect gets. Hence, it is preferred that $N_2 \geq N_1$. Also, it is preferred that $N_2 \geq 3$, in particular $N_2 \geq 10$. Also, it is preferred that $N_1 \geq 3$, in particular $N_1 \geq 10$.

Ideally, each of the controlled gates is configured for a phase kickback onto one and only one of the qudits of the first register. That is, only one controlled gate acts on each of the main qudits. This results in the minimal gate depth possible and thus in a particularly low error rate. However, the described advantages can also be achieved if one or several of the controlled gates is/are configured for a phase kickback onto multiple of the qudits of the first register.

With the described quantum computing device a particularly low error rate can also be achieved because error propagation is limited. If an operator is applied to a qudit multiple instances in series, an error occurring in one of the instances results in errors in all following instances. With the described quantum computing device, however, the number of instances an operator has to be applied to a certain main qudit is reduced. Ideally, each of the main qudits is only acted upon by the operator once. In that case there is no error propagation. That is, when an error occurs it will not destroy the entire calculation, but only slightly reduce the accuracy.

The qudits of the first register can be configured to receive phase kickback(s) from one or more of the controlled gates.

In a preferred embodiment of the quantum computing device the $n$-th qudit of the first register is configured for receiving a phase kickback from the controlled gates of $2^n$ of the main qudits of the second register, wherein $n = 0, ..., N_1 - 1$.

In particular in this configuration the described quantum computing device can be used for QPE or QAE.

For example, in case of $N_1 = 2$ there is one qudit in the first register that receives a phase kickback from the controlled gate of one of the main qudits of the second register and another qudit in the first register that receives a phase kickback from the controlled gates of two of the main qudits of the second register. In case of $N_1 = 3$ there is in addition a further qudit in the first register that receives a phase kickback from the controlled gates of four of the main qudits of the second register.

In a further preferred embodiment of the quantum computing device for at least one of the main qudits of the second register the corresponding controlled gate is configured for a phase kickback onto one of the qudits of the first register in that the respective qudit of the first register is coupled to the respective controlled gate.

The phase kickback can be achieved in different ways. In the present embodiment, at least one phase is kicked back in that the respective qudit of the first register is coupled to the respective controlled gate. In the following, this is referred to as "direct phase kickback". The "respective qudit of the first register" is the qudit onto which the phase is kicked back. The "respective controlled gate" is the controlled gate of the main qudit of the second register from which the phase is kicked back. Preferably, the respective qudit of the first register is coupled to the respective controlled gate in that the respective qudit of the first register is configured to act as control qudit for the respective controlled gate.

It is preferred to use the direct phase kickback for all main qudits of the second register. That is, it is preferred that for all of the main qudits of the second register the corresponding controlled gate is configured for a phase kickback onto one of the qudits of the first register in that the respective qudit of the first register is coupled to the respective controlled gate. In that case all phases are kicked back by the direct phase kickback described here.

In a further preferred embodiment of the quantum computing device for at least one of the main qudits of the second register the corresponding controlled gate is configured for a phase kickback onto one of the qudits of the first register in that

- the second register further has a respective auxiliary qudit coupled to the respective controlled gate, in particular in that the respective auxiliary qudit is configured to act as control qudit for the respective controlled gate,
- the quantum computing device further comprises a respective first entanglement gate configured to entangle the auxiliary qudit with the respective qudit of the first register before the controlled gate acts on the main qudit, and
- the quantum computing device further comprises a respective second entanglement gate configured to untangle the auxiliary qudit and the respective qudit of the first register after the controlled gate has acted on the main qudit.

In this embodiment at least one phase is kicked back as described via the auxiliary qudit. Herein, this is referred to as an "indirect phase kickback" in contrast to the previously described "direct phase kickback".

The indirect phase kickback involves one auxiliary qudit per main qudit of the second register that is used for the indirect phase kickback. Therein, the auxiliary qudit is coupled with the controlled gate of the respective main qudit. For each of the auxiliary qudits there are two entanglement gates. Preferably, the auxiliary qudit is coupled with the controlled gate of the respective main qudit in that the entanglement gates have the respective gate of the first register as control qudit. The "respective qudit of the first register" is the qudit onto which the phase is kicked back. One of the entanglement gates is applied before the controlled gate and one thereafter. It was found that thereby the phase is kicked back onto the respective qudit of the first register. The reason for this is explained in the following.

The entanglement gates are preferably CNOT gates. By means of the first CNOT gate the respective qudit of the first register and the respective auxiliary qudit are entangled. By means of the second CNOT gate the respective qudit of the first register and the respective auxiliary qudit are untangled again. To this end, performing QPE using the described indirect phase kickback may be referred to as "Entangled Phase Estimation". Analogously, QAE using the indirect phase kickback may be referred to as "Entangled Amplitude Estimation".

It is preferred to use the direct phase kickback for one of the main qudits of the second register and to use the indirect phase kickback for all other main qudits of the second register. That is, it is preferred that for $N_2$ - 1 of the main qudits of the second register the corresponding controlled gate is configured for a phase kickback onto one of the qudits of the first register in that

- the second register further has a respective auxiliary qudit coupled to the respective controlled gate, in particular in that the respective auxiliary qudit is configured to act as control qudit for the respective controlled gate,
- the quantum computing device further comprises a respective first entanglement gate configured to entangle the auxiliary qudit with the respective qudit of the first register before the controlled gate acts on the main qudit, and
- the quantum computing device further comprises a respective second entanglement gate configured to untangle the auxiliary qudit and the respective qudit of the first register after the controlled gate has acted on the main qudit.

Using the direct phase kickback in one instance facilitates the quantum computing device, without impairing the advantages achievable with the indirect phase kickback. Preferably, the direct phase kickback is used only for the qudit of the first register that receives exactly one phase kickback.

The advantages described for the quantum computing device can be achieved independently of how the phase is kicked back. It is thus possible to use the same way or different ways for the individual phase kickbacks. In particular, all phases can be kicked back by direct phase kickback, all phases can be kicked back by indirect phase kickback and one or more phases can be kicked back by direct phase kickback with the remaining phases being kicked back by indirect phase kickback. As described in the following, both the direct and the indirect phase kickback have respective advantages and disadvantages.

Using the direct phase kickback has the advantage that the qudits of the first register and the main qudits of the first register are sufficient. In particular, no auxiliary qudits are necessary. That is, the number of qudits is particularly low. However, in all cases where more than one phase is kicked back onto a certain qudit of the first register, the respective controlled gates have to be applied one after the other to the respective main qudit. Although each controlled gate acts onto a different main qudit, this increases the computation time. This is not only disadvantageous in view of computation speed. Moreover, the longer the computation time is, the higher the number of errors gets.

Using the indirect phase kickback has the advantage that all involved controlled gates can be applied simultaneously. This is possible because there is a respective auxiliary qudit for each of the involved main qudits. However, the indirect phase kickback requires a correspondingly larger number of qudits. That is, the parallelization by means of the indirect phase kickback involves more qudits than the parallelization by means of the direct phase kickback. However, with the indirect phase kickback a higher degree of parallelization can be achieved in that the controlled gates can be applied simultaneously. This is possible because due to the auxiliary qudits the controlled gates are fully independent of each other. This reduces the computation time and, consequently, reduces the error rate even further.

In a further preferred embodiment of the quantum computing device it is $N_2 = 2^{N_1} - 1$.

This embodiment is particularly preferably in case the quantum computing device is configured for QPE or QAE. These algorithms involve $2^n$ phase kickbacks for the $n$-th gate in the first register. Hence, there are $1 + 2 + 4 + \cdots + 2^n = 2^{N_1} - 1$ phase kickbacks in total. That is, in the present embodiment there is one main qudit in the second register for each of the required phase kickbacks for QPE or QAE. It is thus possible that each of the main qudits is used for one and only one phase kickback. Consequently, it is sufficient to have one and only one controlled gate per main qudit. This results in the smallest possible gate depth and, hence, in the lowest possible error rate. To this end, the present embodiment can be considered an ideal configuration.

However, the advantages described above can also be achieved to a smaller extent if the configuration is not as ideal as described. If there are not enough qudits available for a full parallelization of the process, a mix of parallel and serial processing can be applied in order to exploit the above described advantages at least partly. In general, it is therefore preferred that $2 \leq N_2 \leq 2^{N_1} - 1$.

In a further preferred embodiment the quantum computing device further comprises for each of the qudits of the first register a respective Hadamard gate for initializing the respective qudit prior to receiving the phase kickback(s).

In particular in this embodiment the quantum computing device is particularly suitable for QPE and QAE.

Alternatively, a gate equivalent to a Hadamard gate can be used.

In a further preferred embodiment the quantum computing device further comprises a Quantum Fourier Transformation (QFT) element configured to act on the qudits of the first register after these have received the respective phase kickback(s).

In the case of QPE, the first register eventually contains the phase or an approximation of the phase in binary encoding. With the Quantum Fourier Transformation element, this can be transferred into the desired result. Hence, in particular in the present embodiment the quantum computing device is particularly suitable for QPE.

The result obtained with the Quantum Fourier Transformation element can either be measured and further processed using conventional hardware. Alternatively, the result obtained with the Quantum Fourier Transformation element can be fed into a further quantum algorithm for further processing.

In a further preferred embodiment of the quantum computing device the controlled gates implement a unitary operator.

In particular in this embodiment the quantum computing device is particularly suitable for QPE and QAE.

In a further preferred embodiment of the quantum computing device the controlled gates implement a Grover operator.

In particular in this embodiment the quantum computing device is particularly suitable for QAE. To this end it should be noted that the Grover operator is a unitary operator.

Since the QAE algorithm is a QPE algorithm with a special operator, the QAE can be parallelized analogously to what has been described for the QPE.

As a further aspect of the invention a use of the described quantum computing device for Quantum Phase Estimation or Quantum Amplitude Estimation is presented.

The advantages and features of the quantum computing device are transferrable to the use, and vice versa.

As a further aspect of the invention a method for performing a quantum algorithm is presented. The method comprises:

a) initializing $N_1$ qudits of a first register and $N_2$ main qudits of a second register in a respective initial state, wherein $N_1 \geq 1$ and $N_2 \geq 2$,
b) applying an operator to each of the main qudits of the second register such that a respective phase is kicked back onto one of the qudits of the first register.

The advantages and features of the quantum computing device and the use thereof are transferrable to the method, and vice versa. The quantum computing device is preferably configured to be used according to the method. The method is preferably performed using the quantum computing device.

The method is preferably performed with a single piece of hardware. However, it is also possible to perform the method using several quantum computers that interact with each other.

According to a preferred embodiment of the method the $n$-th qudit of the first register receives a phase kickback from $2^n$ of the main qudits of the second register, wherein $n = 0, ... , N_1 - 1$.

According to a further preferred embodiment of the method for at least one of the main qudits of the second register step b) is performed in that the respective qudit of the first register is coupled to the operator, in particular in that the respective qudit of the first register acts as control qudit of the operator.

In this embodiment for at least one of the main qudits of the second register step b) is performed by direct phase kickback.

According to a further preferred embodiment of the method for at least one of the main qudits of the second register step b) is performed in that

- a respective auxiliary qudit coupled to the operator,
- the auxiliary qudit is entangled with the respective qudit of the first register before the operator is applied to the main qudit, and
- the auxiliary qudit is untangled from the respective qudit of the first register after the operator has been applied to the main qudit.

Preferably, this is achieved in that

- a respective auxiliary qudit acts as control qudit for the operator,
- a CNOT operator is applied to the auxiliary qudit with the respective qudit of the first register acting as control qudit, before the operator is applied to the main qudit, and
- a CNOT operator is applied to the auxiliary qudit with the respective qudit of the first register acting as control qudit, after the operator is applied to the main qudit.

In this embodiment for at least one of the main qudits of the second register step b) is performed by indirect phase kickback.

In the following the invention will be described with respect to the figures. The figures show preferred embodiments, to which the invention is not limited. In particular, the figures are described to comprise qubits as qudits. However, as set out above, the invention can also be applied with any type of qudits. The figures and the dimensions shown therein are only schematic. The figures show:

Fig. 1:  a prior art quantum computing device,

Fig. 2:  a first embodiment of a quantum computing device according to the invention,

Fig. 3:  a second embodiment of a quantum computing device according to the invention,

Fig. 4:  a third embodiment of a quantum computing device according to the invention,

Fig. 5:  a fourth embodiment of a quantum computing device according to the invention,

Fig. 6:  a fifth embodiment of a quantum computing device according to the invention,

Fig. 7:  a further visualization of a quantum computing device according to the invention, and

Fig. 8:  a possible visualization of the initialization gates used in the quantum computing devices of Fig. 2 to 7.

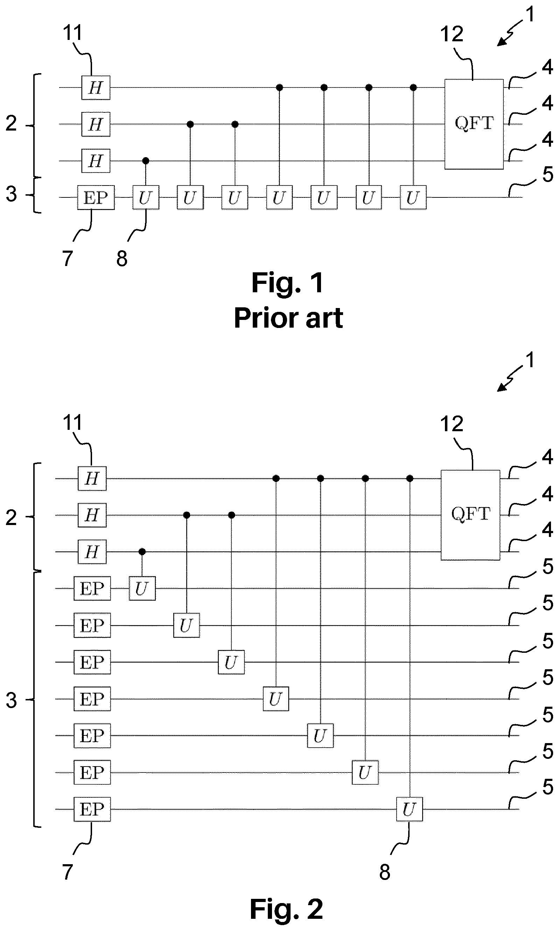

Fig. 1 shows a prior art quantum computing device 1. Thereby, QPE can be performed in that an unknown eigenvalue $\lambda$ of a unitary operator U is calculated from a given eigenstate $|\lambda\rangle$. The prior art quantum computing device 1 comprises $N_1 = 3$ qubits 4 in a first register 2 and $N_2 = 1$ main qubit 5 in a second register 3. Since $N_1 = 3$, the obtained result has a precision of three bits. For each of the qubits 4 of the first register 2 a respective Hadamard gate 11 is provided for initializing the respective qubit 4. For the main qubit 5 an initialization gate 7 and seven controlled gates 8 are provided. By means of the initialization gate 7 the main qubit 5 can be initialized in an eigenstate of the controlled gates 8. Subsequently, the controlled gates 8 can be applied to the main qubit 5 one after the other. Each time a controlled gate 8 acts onto the main qubit 5, a respective phase is kicked back to one of the qubits 4 in the first register 2. Therein, a first of the qubits 4 receives $2^0 = 1$ phase, a second of the qubits 4 receives $2^1 = 2$ phases and a third of the qubits 4

receives $2^{N_1-1} = 2^2 = 4$ phases. To this end, the shown quantum computing device 1 can be used for QPE. In order to obtain the corresponding result, a Quantum Fourier Transformation element 12 (QFT) is provided that is configured to act on the qubits 4 of the first register 2 after these qubits 4 have received the respective phase kickback(s).

The prior art quantum computing device 1 shown in Fig. 1 has the disadvantage of a particularly large gate depth. With achievable fidelities, a large error rate is likely. To this end it should be noted that Fig. 1 shows an example of $N_1 = 3$. Real-world applications, however, require higher values of $N_1$ because the accuracy of results obtained with QPE depend on $N_1$. If the example of Fig. 1 was scaled accordingly, inacceptable error rates might be obtained.

Fig. 2 shows a first embodiment of a quantum computing device 1 according to the invention. This embodiment can be referred to as "(Fully) Parallel Phase Estimation". Therein, the quantum computing device 1 comprises a first register 2 having $N_1$ qubits 4 and a second register 3 having $N_2$ main qubits 5, wherein $N_1 = 3 \geq 1$ and $N_2 = 2^{N_1} - 1 = 7$ $\geq 2$. In particular in the latter the example of Fig. 2 is distinguished from the prior art solution according to Fig. 1. Therefore, in the embodiment of Fig. 2 the operator U is applied only once to each of the main qubits 5. To this end, the embodiment of Fig. 2 can be considered fully parallelized compared to the embodiment of Fig. 1.

The quantum computing device 1 of Fig. 2 comprises for each of the qubits 4 of the first register 2 a respective Hadamard gate 11 for initializing the respective qubit 4 prior to receiving the phase kickback.

Further, the quantum computing device 1 of Fig. 2 comprises, for each main qubit 5 of the second register 3, a respective initialization gate 7 and a respective controlled gate 8. The initialization gates 7 are configured to initialize the respective main qubit 5 in an eigenstate of the respective controlled gate 8. The controlled gates 8 are configured to act on the respective main qubit 5 after initialization by the respective initialization gate 7. The controlled gates 8 implement the same unitary operator U. The initialization gates 7 are configured to initialize the respective main qubit 5 in the same eigenstate of *U.*

Each of the controlled gates 8 is configured for a phase kickback onto one and only one of the qubits 4 of the first register 2. The *n*-th qubit 4 of the first register 2 is configured for receiving a phase kickback from the controlled gates 8 of $2^n$ of the main qubits 5 of the second register 3, wherein $n = 0, ..., N_1 - 1 = 0, ...,2$. Therein, a first of the qubits 4 of the first register 2 receives a phase from $2^0 = 1$ main qubit 5 of the second register, a second of the qubits 4 of the first register 2 receives a respective phase from $2^1 = 2$ main qubits 5 of the second register 3 and a third of the qubits 4 receives a respective phase form $2^{N_1-1} = 2^2 = 1$ main qubits 5 of the second register 3.

In the embodiment of Fig. 2 all phases are kicked back by direct phase kickback. That is, for all of the main qubits 5 of the second register 3 the corresponding controlled gate 8 is configured for a phase kickback onto one and only of the qubits 4 of the first register 2 in that the respective qubit 4 of the first register 2 is configured to act as control qubit for the respective controlled gate 8.

Owing to the phase kickbacks, the quantum computing device 1 of Fig. 2 can be used for QPE. In order to obtain the corresponding result, a Quantum Fourier Transformation element 12 is provided that is configured to act on the qubits 4 of the first register 2 after these qubits 4 have received the respective phase kickback(s).

If the operator U is a Grover operator, the quantum computing device 1 of Fig. 2 can be used for QAE. In that case the embodiment can be referred to as "(Fully) Parallel Quantum Amplitude Estimation".

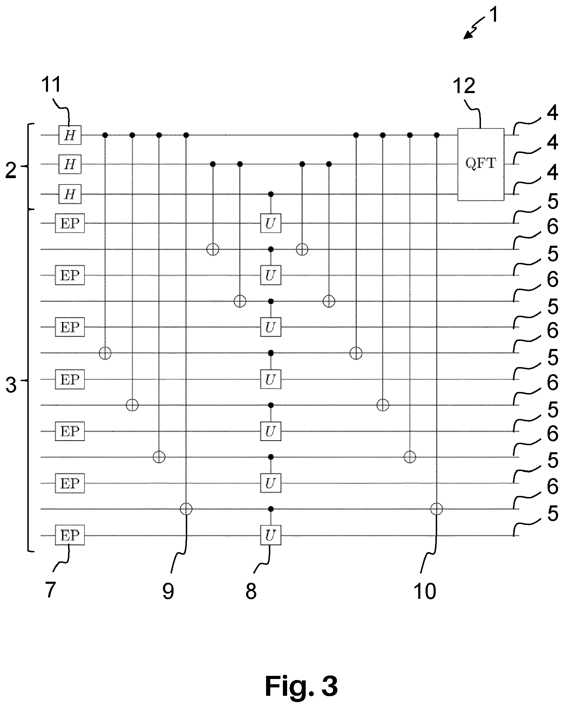

Fig. 3 shows a second embodiment of a quantum computing device 1 according to the invention. This embodiment can be referred to as "(Fully) Entangled Phase Estimation". That is, the embodiment of Fig. 3 can be considered fully entangled compared to the embodiments of Fig. 1 and 2.

In the embodiment of Fig. 3, one phase is kicked back by direct phase kickback. To this end for one and only one of the main qubits 5 of the second register 3 the corresponding controlled gate 8 is configured for a phase kickback onto one and only of the qubits 4 of the first register 2 in that the respective qubit 4 of the first register 2 is configured to act as control qubit for the respective controlled gate 8.

All other phases are kicked back by indirect phase kickback. That is, for all other main qubits 5 of the second register 3 the corresponding controlled gate 8 is configured for a phase kickback onto one of the qubits 4 of the first register 2 in that

- the second register 3 further has a respective auxiliary qubit 6 configured to act as control qubit for the respective controlled gate 8,
- the quantum computing device 1 further comprises a respective first CNOT gate 9 configured to act on the auxiliary qubit 6 with the respective qubit 4 of the first register 2 acting as control qubit, before the controlled gate 8 acts on the main qubit 4, and
- the quantum computing device 1 further comprises a respective second CNOT gate 10 configured to act on the auxiliary qubit 6 with the respective qubit 4 of the first register 2 acting as control qubit, after the controlled gate 8 acts on the main qubit 4.

If the operator U is a Grover operator, the quantum computing device 1 of Fig. 3 can be used for QAE. In that case the embodiment can be referred to as "(Fully) Entangled Quantum Amplitude Estimation".

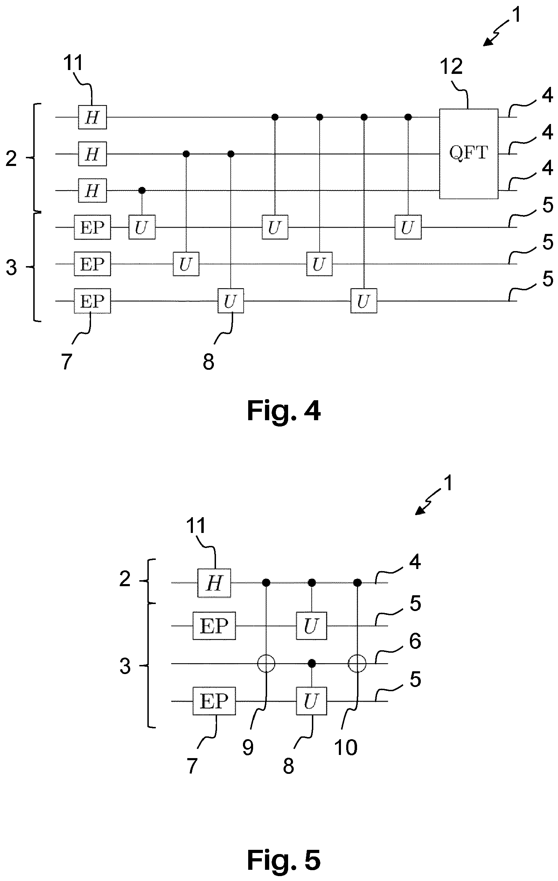

Fig. 4 shows a third embodiment of a quantum computing device 1 according to the invention. Therein, it is $N_1$ = 3 = $N_2$. All phases are kicked back by direct phase kickback. However, from each of the main quits 5 two or three phases are kicked back. To this end, Fig. 4 is an example of how the above described advantages can be exploited partly. Therefore, parallel and serial execution are mixed in this embodiment. That is, the embodiment of Fig. 4 can be considered partly parallelized compared to the embodiment of Fig. 1.

Fig. 5 shows a fourth embodiment of a quantum computing device 1 according to the invention. Therein, it is $N_1$ = 1 and $N_2$ = 2. One phase is kicked back by direct phase kickback and one phase is kicked back by indirect phase kickback. Hence, there is one auxiliary qubit 6. In particular the embodiment of Fig. 5 can be part of a larger quantum circuit. For example, it can be used for a low-depth QAE.

In the following, the idea of the indirect phase kickback is explained for qubits and using CNOT gates based on Fig. 5. At first, the first and third qubits 4 from the top are considered. Therein, the entangled state

$$\frac{1}{\sqrt{2}}\left(|00\rangle + |11\rangle\right)$$

is obtained by applying the first CNOT gate 9. The entangled state obtains one phase for $|11\rangle$ from each U operator implemented by the controlled gates 8, adding up to the square of the phase. That is, the resulting state is

$$\frac{1}{\sqrt{2}}\left(|00\rangle + \lambda^2|11\rangle\right),$$

where $\lambda$ denotes the unknown eigenvalue of $U$, i.e., $U|\lambda\rangle = \lambda|\lambda\rangle$. The second CNOT gate 10 leads to the state

$$\frac{1}{\sqrt{2}}\left(|0\rangle + \lambda^2|1\rangle\right)\otimes|0\rangle$$

and this corresponds to the state

$$\frac{1}{\sqrt{2}}\left(|0\rangle + \lambda^2|1\rangle\right)$$

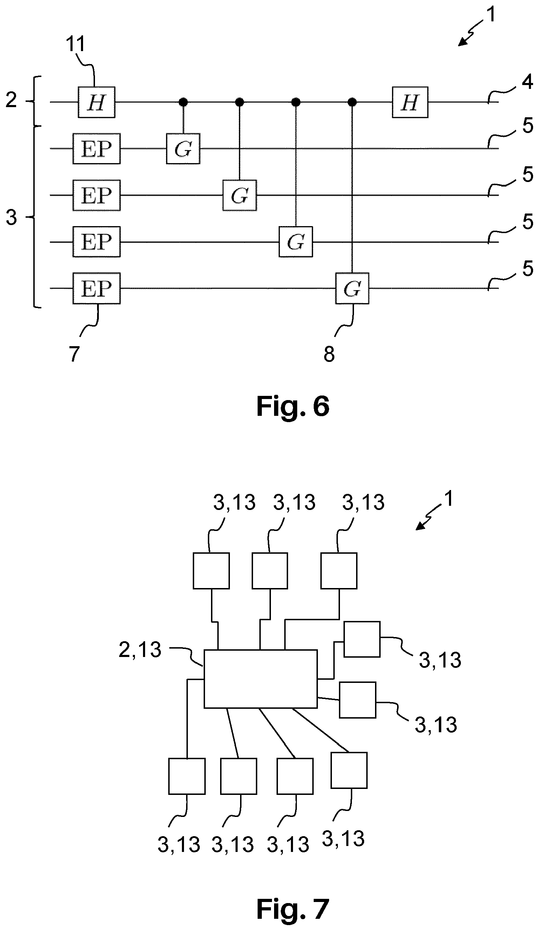

that would also be obtained by the standard algorithm for the operator $U^2$. The generalization to a higher power of $U$ is straightforward. Furthermore, the construction also generalizes to higher precisions, that is by applying the operators

$$U, U^2, U^4, ..., U^{2^{b-1}}$$

for $b$ bits of precision. Fig. 6 shows a fifth embodiment of a quantum computing device 1 according to the invention. Therein, it is $N_1$ = 1 and $N_2$ = 4. All phases are kicked back by direct phase kickback. Also, all phases are kicked back to the same qubit 4 of the first register 2. The controlled gates 8 implement the same Grover operator $G$. To this end the embodiment of Fig. 6 can be used for QAE. This embodiment can be referred to as "Parallel QAE without Phase Estimation". The result of the QAE can be obtained using conventional hardware (not shown).

The embodiment of Fig. 6 is an example of how the invention can be used to combine quantum computing and classical computing. This is based on the possibility to split a QPE algorithm into separate steps on a quantum computer and an additional classical combination of the results. Therein, the quantum computing device 1 shown in Fig. 6 can be used to perform the most complex quantum part of such methods, that is the implementation of $G^{N_2}$ for the Grover operator $G$. As an example, $G^k \cdot EP \cdot |0\rangle$ can be applied successively for $k$ = 0,... ,4, where $EP$ denotes the unitary operator that generates an eigenvector. Fig. 6 shows the example of $G^4 \cdot EP \cdot |0\rangle$. Subsequently, a maximum likelihood estimation (or other statistical technique) can be applied to obtain the overall results (not shown).

In the example of Fig. 6, measuring the qubit 4 of the first register 2 will allow a frequency measurement for results corresponding to $G^4$. Therein, only a single copy of $G$ has to be executed on each of the main qubits 5 of the second register 3. Note that the phase kickback from $G$ is $e^{2i\theta}$. In the standard QAE, each application of $G$ increases the phase by $2\theta$. However, if in the embodiment of Fig. 6 a measurement of the qubit 4 of the first register 2 is performed after the final Hadamard gate 11, the result "1" will be obtained with a probability of

$$\frac{1 - cos(2\theta)}{2} = sin^2(\theta)$$

Therein, the final Hadamard gate 11 has the same function as the previously described Quantum Fourier Transformation element 12. When a circuit like the one shown in Fig. 6 is run with 1,2,...,$n$ copies of $G$ and the qubit 4 of the first register 2 is measured in each case, one can perform a classical analysis on the results. A maximum likelihood estimation or other statistical techniques (usually performed on a classical computer) then yields the result. According to the invention, a single measurement is sufficient, namely that of the qubit 4 of the first register 2 that collects the phase kickbacks. The standard version of QAE, in contrast, would require measurements of all qubits in the respective register. This can be a considerable advantage in cases of large oracles and noisy measurement operations.

It should also be noted that instead of the parallel version of the QAE shown in Fig. 6, the invention could also be used to implement an entangled version of this circuit analogously to what is shown in Fig. 2 and 5. This would require more qubits, but would reduce the gate depth and execution time and therefore may bring additional benefits in terms of error rates.

Fig. 7 shows a further visualization of a quantum computing device 1 that can be used for QPE or QAE. Therein, several Quantum Processing Units 13 are shown.

The parallel and entangled versions of QPE and QAE described with respect to Fig. 2 to 6 allow simplification of the requirements for a quantum computer in order to run QPE and QAE compared to the standard versions. In general, a Quantum Processing Unit (QPU) must have a high degree of connectivity for general purpose computations, that is there must be a basic two-qubit operation between almost all pairs of qubits within the QPU. In particular, each Grover oracle used for standard QAE may require such a highly connected QPU.

A key advantage of the parallel and entangled versions of QPE and QAE is that each of the oracles can be executed on different parts of the quantum computer in parallel and no connections between them are necessary. It is sufficient for the qubits 4 of the first register 2 to be shared between the different parts of the quantum computing device 1. That is, it is sufficient that each QPU 13 for the Grover oracle implementation is connected with a single qubit to the central QPU 13. The central QPU 13 collects the phase kickbacks, that is the central QPU 13 implements the first register 2. The central QPU 13 can also be trivial, in that it is a single qubit 4 which can be measured in the end of the algorithm. Such a layout would be suitable for the parallel QAE without phase estimation. The remaining QPU's 13 implement the second register 3.

The operator EP implemented by the initialization gates 7 of Fig. 2 to 6 is capable of initializing the main qubits 5 in the same eigenstate $|\lambda\rangle$ or an approximation thereof. That is, in contrast to the standard approach, no superposition of eigenstates is used.

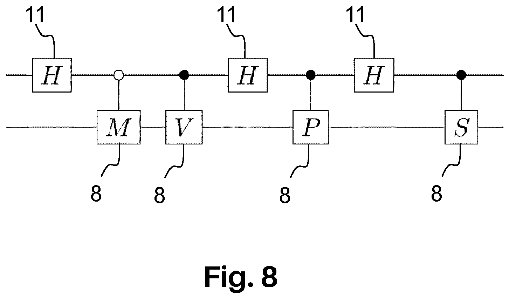

Fig. 8 shows how this initialization can be implemented for relevant examples. Therein, cases are exemplarily considered were U is a Grover operator. It is well known that the Grover operator U for estimating the probability (frequency) of finding "good states" $|\Psi_1\rangle$ in the output $M|0\rangle$ of some model M, represented by an operator, can be written as

$$U = -MS_0M^{-1}S_1$$

where $S_0$ is an operator inverting the sign for the 0-state and doing nothing otherwise, and $S_1$ is an operator inverting the sign of a good state and doing nothing otherwise. Further, it is assumed:

- There is only one good state, i.e. the operator M generates the state $|0\rangle = |\Psi_0\rangle + |\Psi_1\rangle$ and $|\Psi_1\rangle$ is the part that is marked by Grover's oracle and it is a single state in the computational base.
- The good state $|\Psi_1\rangle$ has a small probability, i.e., $|\langle\Psi_1|\Psi_1\rangle|$ is small. This applies to the vast majority of relevant cases.
- There is an efficient circuit for applying the phase -1 to $|\Psi_1\rangle$ and the phase +1 to $|\Psi_0\rangle$. We denote this operation by P.
- Furthermore, we assume that the normalized state $|\tilde{\Psi}_1\rangle$, i.e., the same basis state with $|\langle\Psi_1|\Psi_1\rangle|$ can be built efficiently with a quantum circuit.

Then the construction in Fig. 8 will produce an approximate eigenstate of M, where V is a circuit generating the good state and P the phase operation described above.

To simplify notation, first the interference construction is considered in a more general setting: Operators $M$ and $V$ are considered that turn $|0\rangle$ to $|m\rangle$ and $|v\rangle$, respectively. It is assumed that $|m\rangle$ and $|v\rangle$ are orthogonal and that a phase operation P can be applied with $P|m\rangle = |m\rangle$ and $P|v\rangle = -|v\rangle$. Then the superposition

$$\frac{1}{\sqrt{2}}\left(|m\rangle + |v\rangle\right)$$

can be created with the circuit shown in Fig. 8. Therein, the first Hadamard gate 11 and the two controlled gates 8 implementing the operators *M* and *V*, respectively, generate

$$\frac{1}{\sqrt{2}}\left(|0\rangle|m\rangle + |1\rangle|v\rangle\right).$$

The second Hadamard gate 11 leads to

$$\frac{1}{2}\left(|0\rangle(|m\rangle + |v\rangle) + |1\rangle(|m\rangle - |v\rangle)\right)$$

and after the controlled P operation it is obtained

$$\frac{1}{2}\left(|0\rangle(|m\rangle + |v\rangle) + |1\rangle(|m\rangle + |v\rangle)\right) = \frac{1}{2}(|0\rangle + |1\rangle) \cdot (|m\rangle + |v\rangle).$$

The final Hadamard gate 11 then leads to the state

$$\frac{1}{\sqrt{2}}\left(|m\rangle + |v\rangle\right)$$

when the first qubit is ignored that is restored to $|0\rangle$. Note, that when it is started with the state $|1\rangle|0\rangle$ instead of $|0\rangle|0\rangle$ than the state

$$\frac{1}{\sqrt{2}}\left(|m\rangle - |v\rangle\right)$$

would be obtained in the end.

For the case at hand, where M is used to construct a Grover operator, it is $|m\rangle = |\Psi_0\rangle + |\Psi_1\rangle$ so $|m\rangle$ can be generated by simply applying *M* (which can be provided as a circuit). For *V*, a circuit generating the good state can be implemented, which in many relevant cases is easy for an expert. So it is $|m\rangle = |\Psi_0\rangle + |\Psi_1\rangle$ and $|v\rangle = |\tilde{\Psi}_1\rangle$. Both states are not orthogonal and no unitary P can be found with $P|m\rangle = |m\rangle$ and $P|v\rangle = -|v\rangle$ as desired. However, consider the operator P with the properties from the conditions above. Applying this operator to $|m\rangle$ and $|v\rangle$ this condition is met approximately as $|\Psi_1\rangle$ has a very small magnitude by assumption. Taking this into account, the result at the end of the circuit is

$$\frac{1}{\sqrt{2}}|0\rangle\left(|\Psi_0\rangle + |\tilde{\Psi}_1\rangle\right) + \frac{1}{\sqrt{2}}|1\rangle|\Psi_1\rangle.$$

For $|\Psi_1\rangle$ with small amplitude it is $|\tilde{\Psi}_0\rangle \approx |\Psi_0\rangle$ and $|\tilde{\Psi}_1\rangle \approx 0$ and therefore an approximation is obtained of the desired state

$$\frac{1}{\sqrt{2}}|0\rangle\left(|\tilde{\Psi}_0\rangle + |\tilde{\Psi}_1\rangle\right).$$

With an operator *S* that applies the phase i to $|\tilde{\Psi}_0\rangle$ we obtain an approximation of one of the eigenvectors of the Grover operator.

Note that each initialization gate 7 may requires one more qubit than the implementation of the operator U. This additional qubit is for internal use of the initialization gate only, and is omitted from figures 1 to 6 to simplify the images. This additional qubit is the qubit at the top of Fig. 8. Also note that the gates *U, V* and P in Fig. 8 are preferred to act on a qudit, preferrably consisting of a collection of qubits.

**List of reference numerals**

1   Quantum computing device
2   first register
3   second register
4   qudit of the first register
5   main qudit of the second register
6   auxiliary qudit of the second register
7   initilization gate
8   controlled gate
9   first entanglement gate
10  second entanglement gate
11  Hadamard gate
12  Quantum Fourier Transformation element
13  Quantum Processing Unit

**Claims**

1.  Quantum computing device (1) comprising:

    - a first register (2) having $N_1$ qudits (4), wherein $N_1 \geq 1$,
    - a second register (3) having $N_2$ main qudits (5), wherein $N_2 \geq 2$,
    - for each main qudit (5) of the second register (3) a respective initialization gate (7) and a respective controlled gate (8), wherein the controlled gates (8) are configured to act on the respective main qudit (5) after initialization by the respective initialization gate (7),

    wherein each of the controlled gates (8) is configured for a phase kickback onto one of the qudits (4) of the first register (2).

2.  Quantum computing device (1) according to claim 1, wherein the *n*-th qudit (4) of the first register (2) is configured for receiving a phase kickback from the controlled gates (8) of $2^n$ of the main qudits (5) of the second register (3), wherein $n = 0, ..., N_1 - 1$.

3.  Quantum computing device (1) according to any of the preceding claims, wherein for at least one of the main qudits (5) of the second register (3) the corresponding controlled gate (8) is configured for a phase kickback onto one of the qudits (4) of the first register (2) in that the respective qudit (4) of the first register (2) is coupled to the respective controlled gate (8).

4.  Quantum computing device (1) according to any of the preceding claims, wherein for at least one of the main qudits (5) of the second register (3) the corresponding controlled gate (8) is configured for a phase kickback onto one of the qudits (4) of the first register (2) in that

    - the second register (3) further has a respective auxiliary qudit (6) coupled to the respective controlled gate (8),
    - the quantum computing device (1) further comprises a respective first entanglement gate (9) configured to entangle the auxiliary qudit (6) with the respective qudit (4) of the first register (2) before the controlled gate (8) acts on the main qudit (5), and
    - the quantum computing device (1) further comprises a respective second entanglement gate (10) configured to untangle the auxiliary qudit (6) and the respective qudit (4) of the first register (2) after the controlled gate (8) has acted on the main qudit (5).

5. Quantum computing device (1) according to any of the preceding claims, wherein $N_2 = 2^{N_1} - 1$.

6. Quantum computing device (1) according to any of the preceding claims, further comprising for each of the qudits (4) of the first register (2) a respective Hadamard gate (11) for initializing the respective qudit (4) prior to receiving the phase kickback(s).

7. Quantum computing device (1) according to any of the preceding claims, further comprising a Quantum Fourier Transformation element (12) configured to act on the qudits (4) of the first register (2) after these have received the respective phase kickback(s).

8. Quantum computing device (1) according to any of the preceding claims, wherein all controlled gates (8) implement the same unitary operator.

9. Quantum computing device (1) according to any of the preceding claims, wherein all controlled gates (8) implement the same Grover operator.

10. Use of a quantum computing device (1) according to any of the preceding claims for Quantum Phase Estimation or Quantum Amplitude Estimation.

11. Method for performing a quantum algorithm, comprising

   a) initializing $N_1$ qudits (4) of a first register (2) and $N_2$ main qudits (5) of a second register (3) in a respective initial state, wherein $N_1 \geq 1$ and $N_2 \geq 2$,
   b) applying an operator to each of the main qudits (5) of the second register (3) such that a respective phase is kicked back onto one of the qudits (4) of the first register (2).

12. Method according to claim 11, wherein the $n$-th qudit (4) of the first register (2) receives a phase kickback from $2^n$ of the main qudits (5) of the second register (3), wherein $n = 0, ..., N_1 - 1$.

13. Method according to claim 11 or 12, wherein for at least one of the main qudits (5) of the second register (3) step b) is performed in that the respective qudit (4) of the first register (2) is coupled to the operator.

14. Method according to one of claims 11 to 13, wherein for at least one of the main qudits (5) of the second register (3) step b) is performed in that

   - a respective auxiliary qudit (6) coupled to the operator,
   - the auxiliary qudit (6) is entangled with the respective qudit (4) of the first register (2) before the operator is applied to the main qudit (5), and
   - the auxiliary qudit (6) is untangled from the respective qudit (4) of the first register (2) after the operator has been applied to the main qudit (5).

**Fig. 1**
**Prior art**

**Fig. 2**

**Fig. 3**

Fig. 4

Fig. 5

**Fig. 6**

**Fig. 7**

## Fig. 8

Europäisches
Patentamt

European
Patent Office

Office européen
des brevets

# EUROPEAN SEARCH REPORT

**Application Number**

EP 21 20 7022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMANUEL KNILL ET AL: "Optimal quantum measurements of expectation values of observables", PHYSICAL REVIEW A (ATOMIC, MOLECULAR, AND OPTICAL PHYSICS), vol. 75, no. 1, 1 January 2007 (2007-01-01), XP055617623, USA ISSN: 1050-2947, DOI: 10.1103/PhysRevA.75.012328 * page 2 – page 6 * * page 10 – page 11 * ----- | 1-14 | INV. G06N10/60 G06N10/20 |
| X | YUCHEN WANG ET AL: "Qudits and high-dimensional quantum computing", ARXIV.ORG, CORNELL UNIVERSITY LIBRARY, 201 OLIN LIBRARY CORNELL UNIVERSITY ITHACA, NY 14853, 11 November 2020 (2020-11-11), XP081811073, DOI: 10.3389/FPHY.2020.589504 * page 27 – page 30 * ----- | 1-14 | |
| A | EGGER DANIEL J ET AL: "Credit Risk Analysis Using Quantum Computers", IEEE TRANSACTIONS ON COMPUTERS, IEEE, USA, vol. 70, no. 12, 16 November 2020 (2020-11-16), pages 2136-2145, XP011887248, ISSN: 0018-9340, DOI: 10.1109/TC.2020.3038063 [retrieved on 2021-11-05] * page 2136 – page 2138 * ----- | 1-14 | TECHNICAL FIELDS SEARCHED (IPC) G06N |

The present search report has been drawn up for all claims

| Place of search | Date of completion of the search | Examiner |
|---|---|---|
| The Hague | 25 April 2022 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)